# EUROPEAN PATENT SPECIFICATION

(11) **EP 1 544 138 B1**
(45) Date of publication and mention of the grant of the patent: **07.05.2008**
(21) Application number: 04029967.9
(22) Date of filing: 17.12.2004
(51) Int. Cl.: B65G 65/46, B65G 33/32

(54) **Loss-in-weight feeder for powders and dry goods**
Differentialdosierwaage
Dispositif d'alimentation par mesure de perte de poids

(30) Priority: 19.12.2003 EP 03425814
(43) Date of publication of application: 22.06.2005
(73) Proprietor: Thermo Ramsey Italia S.r.l., 20090 Rodano (MI) (IT)
(72) Inventor: Palma, Guiseppe, 21052 Busto Arsizio (IT); Riva, Gianluigi, 20129 Milano (IT)
(74) Representative: Gislon, Gabriele

(56) References cited:
- WO-A1-03/086912
- US-A- 3 704 076
- US-A- 5 110 015
- US-A- 5 333 762
- US-A- 5 715 976
- US-B1- 6 446 836

## Description

The present invention relates to a loss-in-weight feeder for powders and dry goods, according to the preamble of claim 1.

Loss-in-weight feeders for powders and dry goods are used in many different industries to accurately dose powdered, particulate or granular matters in movement. They are preferred to other continuous weighing techniques such as conveyor belt feeders, screw feeders, vibrating plate feeders, Coriolis-effect feeders and others, because they allow to modulate rates of very small entity with high precision. They are also space saving and easy to install.

A loss-in-weight feeder is a part of a loss-in-weight feeder assembly consisting of three basic elements: a precision static scales, the feeder itself and the electronic control instrument.

The feeder consists of a hopper containing the material to be dosed, an extractor usually consisting of one or two worm screws, a lump breaker favouring the flow of the material, and one or two motors driving both the screws and the lump breaker and connected to the electronic control instrument.

The whole assembly is supported by a static scale which constantly measures the overall weight of the feeder as well as the material contained therein and sends the related data to the electronic control instrument.

Upon operation of the motor, the screw or screws extract the material from the hopper at a rate which is proportional to the speed of rotation of the screws and depends on the system dimensional geometric factors. By suitably modulating the rotation speed of the screws the desired rate, either constant or variable, is obtained.

The rate is measured by the electronic instrument, which at preset intervals of time measures the reduction in weight of the system, and calculates the ponderal rate by dividing the amount of weight lost by the system by the time taken to lose it. Suitable electronic filtering systems allow to stabilise the measurement in the presence of vibrations, abrupt changes in weight, etc.

Loss-in-weight feeders such as those described above have been on the market for years, and are manufactured for different industrial applications.

The present invention relates to feeders for dry goods and in particular for dry goods in the food industry.

State of the art feeders have several drawbacks. In particular, in the foods industry it is very important to avoid stagnation or infiltration of the dosed product both inside the feeder and the mechanical parts thereof and to have the possibility of cleaning the feeder thoroughly.

For this purpose it is already known to place the kinematic motion, i.e. the gears assembly, driving the screw and lump breaker rotation inside an outer case (or container) which is independent from the hopper containing the material to be dosed. Nevertheless, the feeders known in the foodstuffs industry are prone to contamination and must be frequently dismantled and cleaned; the resulting interruptions in the production cycle increase production costs. Another drawback is related with the treating of sugar and similar highly abrasive materials: in this case the treated product can quickly wear out the components of the gear and motor assembly.

US-A-3,704,076 discloses a feeder for batching and charging paste-like products having a hopper, a screw and a gear assembly operating said screw, the gear box being spaced from the hopper. The screw is directly connected to the gear assembly. The problem discussed in this document is to clean the screw conveyor from the paste-like materials that are treated in it The claimed solution is to provide a cylindrical spiral element that is rotated around the screw while the screw is rotated, to clean it.

US-A-5110015 discloses a seal arrangement for a dry good material feeder by extending the screw into a duct extending from the hopper to the gear and motor assembly: the bearing is positioned within this duct and supports a shaft that is coupled to the screw by a pin and locking recesses with a helical spring keeping the pin locked in the recesses. This arrangement is however not effective for preventing the dry, powder, material to reach the bearing and the locking elements.

In fact, US-A-5110015 is referred to by later patent US-A-5715976, that discloses a cartridge bearing assembly for a dry good material feeder in which a duct extends from the hopper and a bearing support assembly is removably mounted in the duct for supporting a drive shaft. This shaft is coupled to the screw by means of a pin on the shaft, guide slots and locking recesses on the screw and a helical compression spring to keep the pin locked into the locking recesses. The problem to be solved by this patent is to reduce the time (and the cost) required for replacing the bearing according to US-A-5110015, that are said to last no longer than 200-220 hours, thus acknowledging that the sealing arrangement of the previous patent is not so effective.

Both the above mentioned embodiments, if used in the food industry, will require long cleaning times and, because of their design, could result in contamination of the food product. Moreover, the service life of the bearings is too short.

Therefore, the need is felt for a feeder, particularly for use in the food industry, in which no infiltrations or contamination of the product in the gears occur and in which all parts can be easily cleaned in order to prevent the forming of perishable product residues that could result in the formation of germs, and which is able to treat highly abrasive materials without having to often replace the bearings.

The aim of this invention is to solve the above mentioned drawbacks and to provide a feeder with the required features.

This aim is achieved by the present invention, which concerns a loss-in-weight feeder according to claim 1. The feeder of the invention comprises a hopper housing at least one product dispensing screw; at least one motor for driving the said dispensing screw or screws; at least one gear assembly, housed in a container and comprising a shaft connecting said screw to said motor; and means for coupling said dispensing screw(s) to said moving part comprising a drive shaft to be coupled to the dispensing screw and a bearing for said shaft. According to the invention the hopper and the container housing the gears assembly, i.e. the kinematic motion means, are spaced away from one another, a duct extends from the bearing to the hopper, the shaft extends outside the duct into the box for the gears assembly and the bearing is spaced away from the hopper and outside the duct. Preferably, the bearing is a thrust bearing and is located in the gear assembly box.

According to one aspect of the invention, sealing means are provided at the end of the duct to seal the shaft outside the gear assembly box or container.

According to another aspect of the invention, the distance between said sealing means and said hopper is greater than the distance reached by the product to be dispensed because of its natural angle of rest inside said duct.

According to another aspect of the invention, the dispensing screw extends outside said hopper, inside said duct, in the direction of the thrust bearing.

A further feature of the invention is that the drive shaft is axially coupled to the screw or auger shaft by means of a pin axially extending from the drive shaft and received in a corresponding housing or recess extending longitudinally, i.e. axially, in the screw or auger shaft. There is no spring or other elastic means to keep the drive shaft connected to the screw: once it has been assembled, the screw is biased, i.e. pushed, against the drive shaft by the discharge chamber so as to remain engaged to said shaft.

The feeder according to the invention has several advantages over prior art.

By spacing the facing walls of the material-containing hopper and of the box or container housing the kinematic motion means, i.e. the gears assembly, which drives the shaft of the product dispensing auger screw and by placing the thrust bearing for supporting the screw and the relevant drive shaft in the space formed thereby or, preferably, within the gear assembly box, the contact between the bearing (and the relative seal or gasket) and the product to be dispensed can be dramatically reduced or completely eliminated. Substantially reducing or preventing this contact results in longer life of the bearing, particularly when the product to be treated is abrasive, such as sugar, and it greatly reduces or even prevents the possibility of an infiltration and stagnation of the product around and in the bearing itself.

In addition, the feeder according to the invention can be easily and rapidly cleaned; a sufficient distance will allow for a very accurate cleaning, such as by hand, of the facing walls of both the hopper and the gear assembly box. A further advantage in cleaning is that the means coupling the drive shaft to the auger are spaced from the bearing and are located within the duct, while the bearing is located outside the duct: when cleaning is necessary, the augers are removed from the drive shaft by removing the delivery chamber and pulling the screw away from the drive shaft. The relevant area can then be cleaned in a very effective way by e.g. pressurised jets of cleaning solution and water; these pressurised jets could not be used in the above discussed prior art embodiments because of the risk of pushing the powder material into the bearing under the jet pressure.

The invention will be now disclosed in greater detail in an illustrative and nonlimiting manner with reference to the accompanying figures, wherein:
- fig. 1 is a schematic top perspective view of a feeder according to the invention;
- fig. 2 is a schematic bottom perspective view of the feeder in fig. 1;
- fig. 3 is a schematic cross-sectional side view of the feeder of the above figures;
- fig. 4 is an enlarged view of a detail of the feeder in fig. 3;
- fig. 5 is an enlarged side view, partially sectional, of the embodiment of fig. 3;
- fig. 6 is an enlarged top view of the feeder of fig. 6;
- fig. 7 is a perspective, exploded view of a sealing means of the drive shaft for the auger screws.

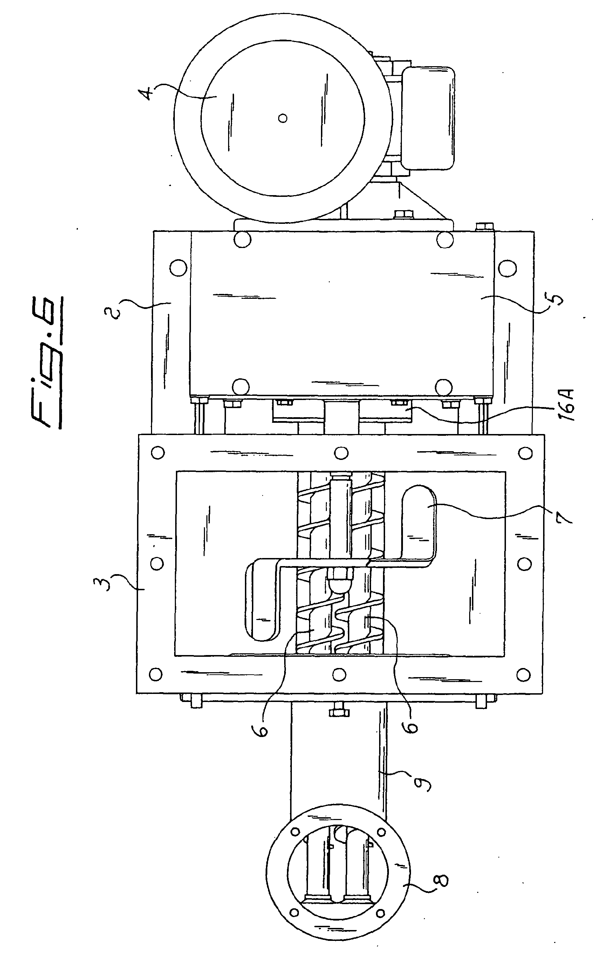

With reference to the above figures, the feeder 1 according to the invention comprises a base 2 to which a hopper, or tray, 3 is mounted into which the product to be dosed is poured, and a box or container 5 containing the gears assembly, i.e. the kinematic motion, connecting the motor to the driven feeder elements, and at least one motor 4, cantilever mounted on box 5. The motor 4 and gear assembly 5 are a motor-speed variator-reducer gear unit driving at least one product dispensing worm screw, or auger, 6 and a lump breaker 7. In the shown embodiment there are two screws 6, which are located at the bottom of the hopper or tray 3 in a correspondingly shaped area. As shown in fig. 6, the two augers or screws are mounted parallel and the flights or turns of helix of one screw are positioned within the helix turns of the other screw, without ever touching each other during operation of the feeder.

The hopper has a front wall 11 and a rear wall 12, i.e. a wall facing box 5.

Screws 6 extend through front wall 11 outside hopper 3 into a discharge, or delivery, chamber 8, preferably shaped as a cylinder. The portions of the screws protruding from the front wall 11 of the hopper 3 are housed in a double duct 9 connecting the discharge chamber 8 with hopper 3; the duct 9 is welded or otherwise made integral with the chamber 8 at one end and is mounted on the hopper 3 by means of a flange 10 and relative nuts and bolts 10' at the other end, in order to be quickly detached from the hopper when the feeder has to be cleaned. The ends 6a of the screws 6 are rotatably housed in corresponding recesses 19 formed on the front side of discharge chamber 8.

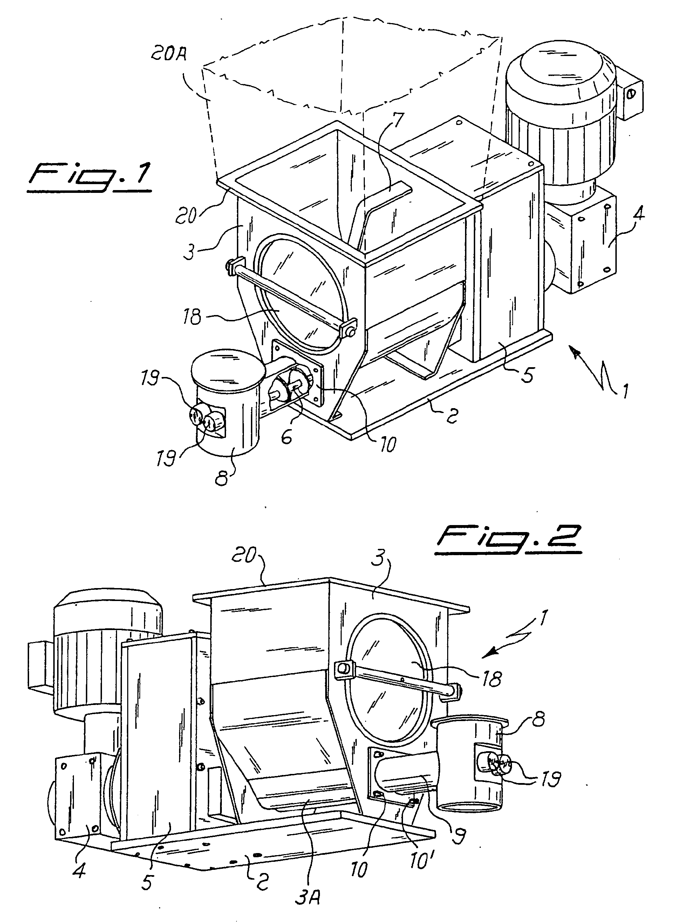

The hopper 6 comprises an upper peripheral flange 20 to detachably support an additional hopper 20A formed by four walls being mounted on dispensing hopper 3 in order to feed the product to the dispensing hopper 3. The additional hopper 20A is shown in dotted lines in fig. 1. The interior of hopper 3 can be reached for inspection and cleaning through a hatch 18 positioned on the front wall 11.

On the opposite side to the front wall 11 of the hopper 3, the screw 6 extends through rear wall 12 into a duct 17. Duct 17 runs from the bearing and bearing sealing group 16, 16A to the wall 12 of the hopper 3 and houses one end of the dispensing screw 6 and a portion of the means 14 coupling the auger or feeding screw 6 to the gears assembly 15. Auger 6 is engaged to means 14, i.e. a drive shaft, that engage it to the gears assembly, or kinematic motion means, 15 provided inside box 4, the means 14 comprising a thrust bearing 16 with relative sealing means 16A.

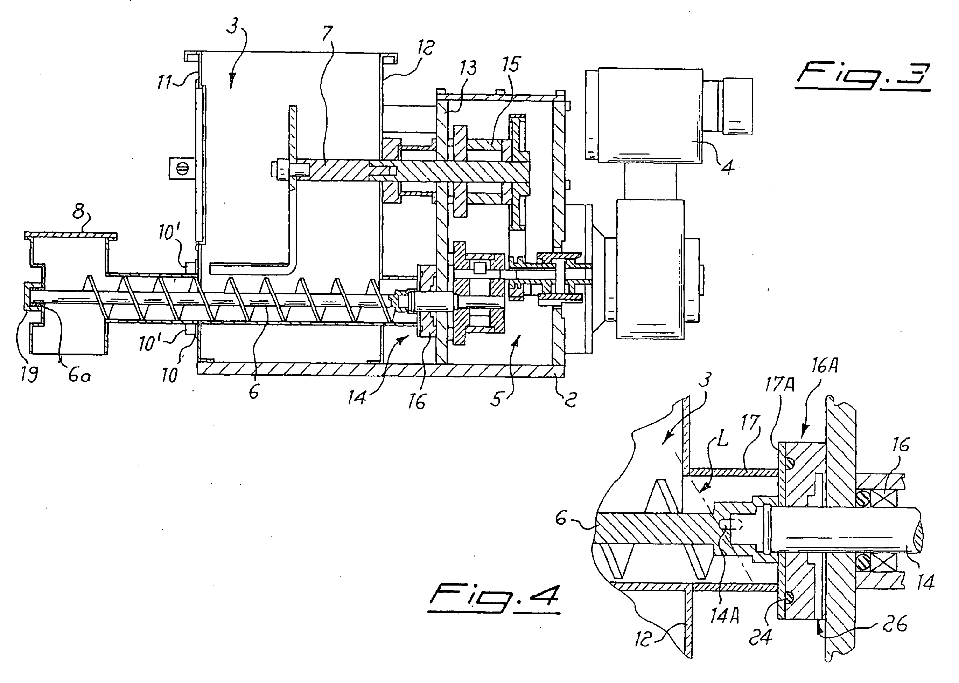

According to the present invention, the box or container 5 and the hopper 3 are spaced from one another by a sufficient distance for the thrust bearing, including sealing means, to be placed therebetween, this bearing being also spaced away from the rear wall 12 of the hopper and outside the duct 17. Particularly, the distance between the bearing 16 and the wall 12, i.e. the length of duct 17 is such to reduce or prevent the contact between the bearing and the product to be dispensed. Preferably, as better shown in fig. 4, the bearing 16 is located inside the box 5 and the sealing means 16A are located between box 5 and duct 17, outside said duct. In other words, the bearing and the sealing means for the drive shaft can be located both between box 5 and duct 17 or, preferably, bearing 16 is located within the box 5 and sealing means 16A is located outside duct 17, between duct 17 and box 5.

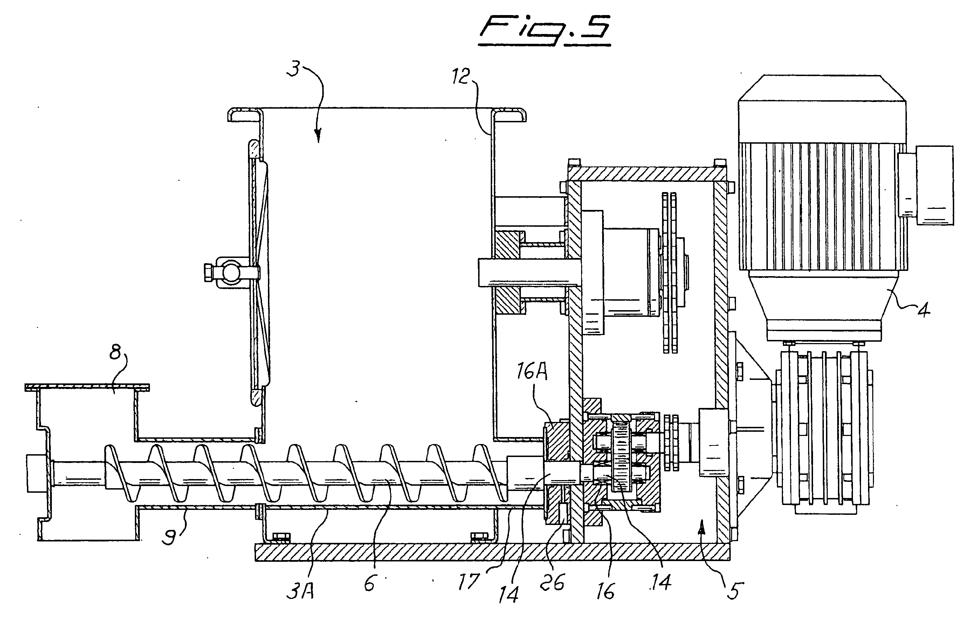

The diameter of the duct 17 is the smallest possible compatibly with the dimension of what is housed in said duct, in other words an end of the dispensing screw 6 and a portion of the drive shaft means 14 connecting the screw to the gear assembly 15. In the preferred embodiment shown in fig. 4 and fig. 5 the screw extends beyond wall 12, outside the hopper, into the duct 17, to obtain an expulsion action (by means of the screw flights) of the product that penetrates into duct 17.

Preferably, the distance between the bearing sealing means 16A and the duct end 17 i.e. the hopper 3, is greater than the distance reached by said product inside the duct 17 due to its natural angle of rest. In Fig. 4 the natural angle of rest taken by the product inside the duct 17 is shown with line "L": as it can be seen, even at rest, i.e. with the screw stopped, the product does not come into contact with sealing means 16A. The length of the duct 17 is in generally set to be greater than the maximum distance that may be reached by any product inside the duct itself, taking into account for which products the feeder will be used.

Thus, the duct 17 together with its length, in other words together with the part separating the sealing means 16A from the hopper 3, form further sealing means that prevent the product from coming into contact with the bearing 16.

In fig. 4 it is also shown the preferred way of coupling drive shaft 14 to auger 6. This is obtained by means of a pin 14A protruding axially, i.e. longitudinally, from the end of drive shaft 14 into a corresponding recess axially extending into the screw body to provide a housing within the auger, or feeding screw, 6. The thus reached coupling is an axial coupling, free of any spring or elastic means and is based on the fact that the pin 14A will transmit the torque to auger 6. In order to prevent auger 6 to detach from shaft 14, the auger is kept in place against drive shaft 14 by the action of previously disclosed discharge chamber 8, that is rotatably housing the other end of auger 6 in recesses 19. In other words, the length of auger 6 is such that when the auger is mounted it is fitting on drive shaft 14, possibly slightly pushed against it.

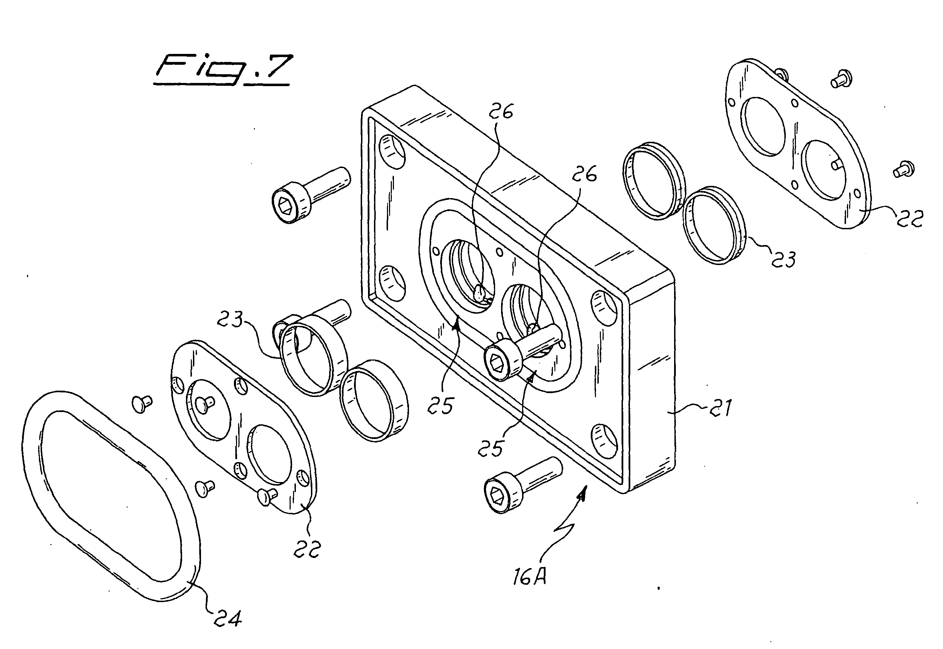

Fig. 7 shows an embodiment of sealing means 16A. This means is comprising a main box body 21 having two holes 25 for the two augers shafts, two plates 22 and four rings or gaskets 23 for sealing holes 25, and a gasket 24 for sealing the box 21 against the wall 17A that closes duct 17. At least one duct 26 is provided within box 21 to connect the walls of holes 25 with the exterior (see also fig.4) in order to feed a pressurized fluid, e.g. pressurized air, to the holes and improve the overall sealing effect of sealing means 16A. in other words, a pneumatic seal is obtained, wherein the pressurized air flow contributes to the sealing of shaft 14.

In this way it is possible to dramatically increase the service life of thrust bearing 16; the life is in fact extended from the 220 hours of cited prior art documents to about 6.000 hours. This is possible thanks to the positioning of the bearing outside the duct and preferably inside the gear assembly box 5, with sealing means located between the end of the duct and the box.

The feeder according to the present invention can be cleaned in a very simple and easy way.

When necessary, the nuts 10' can be unscrewed and the ducts 9 removed, together with discharge chamber 8 and augers or screws 6, from hopper 3. More particularly, the screws 6 are removed from corresponding shafts 14 by simply pulling them away from pin 14A. As a matter of fact, contrary to known prior art embodiments, the screws are detachable and can be removed from the front side while the bearing 16 for the screws and the drive shaft 14 are fixed. The screws are then removed from ducts 9 and the feeder can be thoroughly cleaned and sanitized both outside and inside, e.g. with pressurized jets, in a very quick and effective way.

As far as the exterior is concerned, the distance between wall 12 of the hopper 3 and wall 13 of the case 5 is preferably enough to have also a manual cleaning of the walls carried out.

## Claims

1. Loss-in-weight feeder, comprising a hopper (3) in which is housed at least one product dispensing screw (6), at least one motor (4) for operating said dispensing screw or screws (6), at least one gear assembly (15) connecting said screw to said motor, coupling means for connecting said screw (6) to said gear assembly (15) comprising a drive shaft (14) and a bearing (16) for said drive shaft, wherein said gear assembly is housed in a box (5) spaced from said hopper (3), and a duct (17) extending from said hopper (3) towards said bearing (16), said bearing (16) is located outside said duct (17), spaced away from said hopper, between said hopper (3) and said gear assembly,
**characterized in that** said duct (17) houses a portion of said drive shaft (14) on which said screw (6) is detachably mounted, and sealing means (16A) are provided outside said duct (17), between said duct and said gear assembly box (5).

2. The feeder according to claim 1, wherein said bearing (16) is located inside said gear assembly box (5).

3. The feeder according to any previous claim, **characterized in that** the distance between said bearing (16) and said hopper (3) is greater than the distance reached by said product because of its angle of natural rest (L) inside said duct (17).

4. The feeder according to any previous claim, wherein said dispensing screw (6) is extending outside said hopper (3), inside said duct (17), in the direction of said bearing (16).

5. The feeder according to any previous claim, wherein the distance between said hopper (3) and said gear assembly box is sufficient to allow manual cleaning thereof.

6. The feeder according to any previous claim, wherein said dispensing screw (6) extends outside said hopper (3) to a discharge chamber (8) and wherein said hopper (3) and said discharge chamber (8) are connected by a housing duct (9) of the dispensing screw, said housing duct (9) being detachably mounted (10,10') on said hopper (3).

7. The feeder according to any previous claim, wherein said drive shaft is provided with a pin axially extending from said drive shaft and said screw is provided with an axially extending recess for said pin (14A) to axially coupled said screw to said drive shaft (14).

8. The feeder according to any previous claim, wherein said sealing means (16A) for said drive shaft comprises means (26) for feeding pressurized air to an area around said drive shaft (14).

9. The feeder of any previous claim, wherein two parallel screws are provided, the flights of one screw being positioned between the flights of the other screw.

## Patentansprüche

1. Differentialdosierwaage, umfassend einen Trichter (3), in dem wenigstens eine Produktausgabeschnecke (6) untergebracht ist, wenigstens einen Motor (4) für den Betrieb der Ausgabeschnecke oder -schnecken (6), wenigstens eine Getriebebaugruppe (15), die die Schnecke mit dem Motor verbindet, Kupplungseinrichtungen zum Verbinden der Schnecke (6) mit der Getriebebaugruppe (15), umfassend eine Antriebswelle (14) und ein Lager (16) für die Antriebswelle, wobei die Getriebebaugruppe in einem Kasten (5) untergebracht ist, der vom Trichter (3) räumlich abgesetzt ist, und einen Kanal (17), der vom Trichter (3) hin zum Lager (16) verläuft, wobei sich das Lager (16) außerhalb des Kanals (17) in einem Abstand vom Trichter zwischen dem Trichter (3) und der Getriebebaugruppe befindet,
**dadurch gekennzeichnet, dass** der Kanal (17) einen Teil der Antriebswelle (14) aufnimmt, auf der die Schnecke (6) lösbar befestigt ist, und Dichtungsmittel (16A) außerhalb des Kanals (17) zwischen dem Kanal und der Getriebebaugruppe (5) bereitgestellt sind.

2. Dosiervorrichtung nach Anspruch 1, wobei sich das Lager (16) innerhalb der Getriebebaugruppe (5) befindet.

3. Dosiervorrichtung nach einem der vorstehenden Ansprüche, **dadurch gekennzeichnet, dass** der Abstand zwischen dem Lager (16) und dem Trichter (3) größer ist als der Abstand, den das Produkt aufgrund seines natürlichen Ruhewinkels (L) im Innern des Kanals (17) erreicht.

4. Dosiervorrichtung nach einem der vorstehenden Ansprüche, wobei die Ausgabeschnecke (6) im Innern des Kanals (17) aus dem Trichter (3) heraus in Richtung des Lagers (16) verläuft.

5. Dosiervorrichtung nach einem der vorstehenden Ansprüche, wobei der Abstand zwischen dem Trichter (3) und dem Kasten mit der Getriebebaugruppe ausreichend ist, um eine manuelle Reinigung derselben zu ermöglichen.

6. Dosiervorrichtung nach einem der vorstehenden Ansprüche, wobei die Ausgabeschnecke (6) aus dem Trichter (3) heraus zu einer Austragkammer (8) verläuft und wobei der Trichter (3) und die Austragkammer (8) durch einen Gehäusekanal (9) der Ausgabeschnecke verbunden sind, wobei der Gehäusekanal (9) am Trichter (3) lösbar befestigt ist (10, 10').

7. Dosiervorrichtung nach einem der vorstehenden Ansprüche, wobei die Antriebswelle mit einem Stift versehen ist, der sich axial aus der Antriebswelle erstreckt, und die Schnecke mit einer axial verlaufenden Aussparung für den Stift (14A) versehen ist, um die Schnecke axial mit der Antriebswelle (14) zu verbinden.

8. Dosiervorrichtung nach einem der vorstehenden Ansprüche, wobei das Dichtungsmittel (16A) für die Antriebswelle Hilfsmittel (26) für die Zufuhr von Druckluft an einen Bereich um die Antriebswelle (14) umfasst.

9. Dosiervorrichtung nach einem der vorstehenden Ansprüche, wobei zwei parallele Schnecken bereitgestellt sind, wobei die Flügel der einen Schnecke zwischen den Flügeln der anderen Schnecke angeordnet sind.

## Revendications

1. Dispositif d'alimentation par mesure de perte de poids, comprenant une trémie (3) dans laquelle est logée au moins une vis de distribution de produit (6), au moins un moteur électrique (4) pour actionner ladite ou lesdites vis de distribution (6), au moins un ensemble de pignons (15) reliant ladite vis audit moteur électrique, un moyen d'accouplement pour relier ladite vis (6) audit ensemble de pignons (15) comprenant un arbre de commande (14) et un palier (16) pour ledit arbre de commande, dans lequel ledit ensemble de pignons est logé dans un boîtier (5) situé à distance de ladite trémie (3), et un conduit (17) s'étendant depuis ladite trémie (3) en direction dudit palier (16), ledit palier (16) étant situé à l'extérieur dudit conduit (17), à distance de ladite trémie, entre ladite trémie (3) et ledit ensemble de pignons,
**caractérisé en ce que** ledit conduit (17) loge une partie dudit arbre de commande (14) sur lequel ladite vis (6) est montée de façon amovible, et **en ce qu'**un moyen d'étanchéité (16A) est disposé à l'extérieur dudit conduit (17), entre ledit conduit et ledit boîtier (5) de l'ensemble de pignons.

2. Dispositif d'alimentation selon la revendication 1, dans lequel ledit palier (16) est placé à l'intérieur dudit boîtier (5) de l'ensemble de pignons.

3. Dispositif d'alimentation selon l'une quelconque des revendications précédentes, **caractérisé en ce que** la distance entre ledit palier (16) et ladite trémie (3) est plus grande que la distance parcourue à l'intérieur dudit conduit (17) par ledit produit du fait de sa pente naturelle au repos (L).

4. Dispositif d'alimentation selon l'une quelconque des revendications précédentes, dans lequel ladite vis de distribution (6) se prolonge à l'extérieur de ladite trémie (3), à l'intérieur dudit conduit (17), en direction dudit palier (16).

5. Dispositif d'alimentation selon l'une quelconque des revendications précédentes, dans lequel la distance entre ladite trémie (3) et ledit boîtier de l'ensemble de pignons est suffisante pour en permettre le nettoyage manuel.

6. Dispositif d'alimentation selon l'une quelconque des revendications précédentes, dans lequel ladite vis de distribution (6) se prolonge à l'extérieur de ladite trémie (3) jusqu'à une chambre d'évacuation (8) et dans lequel ladite trémie (3) et ladite chambre d'évacuation (8) sont reliées par un conduit formant carter (9) pour la vis de distribution, ledit conduit formant carter (9) étant monté de façon amovible (10, 10') sur ladite trémie (3).

7. Dispositif d'alimentation selon l'une quelconque des revendications précédentes, dans lequel ledit arbre de commande est muni d'une tige dépassant axialement dudit arbre de commande et où ladite vis comporte un creux s'étendant axialement (14A) destiné à la tige de façon à accoupler axialement ladite vis avec ledit arbre de commande (14).

8. Dispositif d'alimentation selon l'une quelconque des revendications précédentes, dans lequel ledit moyen d'étanchéité (16A) destiné audit arbre de commande comprend un moyen (26) d'alimentation en air comprimé d'une zone entourant ledit arbre de commande (14).

9. Dispositif d'alimentation selon l'une quelconque des revendications précédentes, dans lequel sont disposées deux vis parallèles, les filets de l'une des vis étant placés entre les filets de l'autre vis.
